# EUROPÄISCHE PATENTSCHRIFT

(11) **EP 1 222 471 B1**
(45) Veröffentlichungstag und Bekanntmachung des Hinweises auf die Patenterteilung: **28.05.2008**
(21) Anmeldenummer: 00962286.1
(22) Anmeldetag: 02.08.2000
(51) Int. Cl.: G01P 15/08, G01P 3/486, G01D 5/347

(54) **GEBERSYSTEM MIT EINEM BESCHLEUNIGUNGSGEBER UND EINEM POSITIONSGEBER**
SENSOR SYSTEM COMPRISING AN ACCELERATION SENSOR AND A POSITION SENSOR
SYSTEME DE MESURE AVEC ELEMENT DE MESURE D'ACCELERATION ET ELEMENT DE MESURE DE POSITION

(30) Priorität: 30.09.1999 DE 19947277
(43) Veröffentlichungstag der Anmeldung: 17.07.2002
(73) Patentinhaber: Dr. Johannes Heidenhain GmbH, 83292 Traunreut (DE)
(72) Erfinder: SCHWABE, Dr. Michael, 83093 Bad Endorf/Hemhof (DE)
(86) Internationale Anmeldenummer: PCT/EP2000/007474
(87) Internationale Veröffentlichungsnummer: WO 2001/023897

(56) Entgegenhaltungen:
- EP-A- 0 661 543
- US-A- 4 507 607

## Beschreibung

Die Erfindung betrifft ein Gebersystem nach dem Oberbegriff des Anspruchs 1.

Ein derartiges Gebersystem ist in der EP 0 661 543 B1 beschrieben. Es besteht aus einem Beschleunigungsgeber in Form eines Ferraris-Sensors, bei dem eine elektrisch leitende Scheibe als Messstruktur von einem magnetischen Fluss senkrecht durchströmt wird. Dieser magnetische Fluss wird durch einen Magneten erzeugt. Wird die Scheibe relativ zum Magnet bewegt, entstehen Wirbelströme, die wiederum ein magnetisches Feld erzeugen. Die Änderung dieses magnetischen Feldes bzw. Flusses wird durch einen Detektor in Form einer Spule erfasst und ist ein Maß für die Beschleunigung. Am Rand dieser Scheibe ist eine optisch oder induktiv abtastbare Maßverkörperung angebracht, die zur Positionsermittlung der Scheibe von einem Abtastkopf abgetastet wird.

Dabei ist von Nachteil, dass die Scheibe relativ viel Platz benötigt.

Aufgabe der Erfindung ist es daher, ein Gebersystem mit einem Beschleunigungsgeber und einem Positionsgeber derart auszugestalten, dass ein möglichst kompakter Aufbau erreicht wird.

Diese Aufgabe wird durch ein Gebersystem mit den Merkmalen des Anspruchs 1 gelöst.

Weiterbildungen und vorteilhafte Ausgestaltungen sind in den abhängigen Ansprüchen angegeben.

Das erfindungsgemäße Gebersystem weist den Vorteil auf, dass die zur Positionsmessung erforderliche Maßverkörperung unmittelbar auf der Messstruktur zur Beschleunigungsmessung vorgesehen ist und damit platzsparend angeordnet ist. Das Beschleunigungssignal und das Positionssignal werden dabei aus einem gemeinsamen Abtastbereich abgeleitet. Es wurde erkannt, dass keine quer zur Messrichtung nebeneinander liegenden Abtastbereiche erforderlich sind.

Vorteilhaft werden durch die Maßverkörperung die elektrischen Eigenschaften der Messstruktur des Beschleunigungsgebers nicht beeinflusst. Die Maßverkörperung des Beschleunigungsgebers kann in einer separaten Schicht bzw. in einem Schichtenpaket realisiert werden, die mit der Messstruktur des Beschleunigungsgebers derart verbunden ist, dass sich die Messstruktur unabhängig von den die Maßverkörperung tragenden Schichten ausdehnen kann.

Alternativ kann die Maßverkörperung in der Messstruktur selbst ausgebildet sein, wobei dann Maßnahmen wie Signalfilterung, Signalglättung, Multiplexen bzw. Umschalten zwischen mehreren Detektoren oder Mittelung getroffen werden müssen, um das Beschleunigungssignal möglichst unbeeiflusst von der Maßverkörperung zu erhalten.

Die Erfindung wird im Folgenden anhand der Zeichnungen näher erläutert. Es zeigt:
- Figur 1: ein erstes Ausführungsbeispiel eines erfindungsgemäßen Gebersystems,
- Figur 2: eine zweites Ausführungsbeispiel,
- Figur 3: ein drittes Ausführungsbeispiel,
- Figur 4: eine perspektivische Ansicht der Messstruktur des dritten Ausführungsbeispiels und
- Figur 5: ein viertes Ausführungsbeispiel.

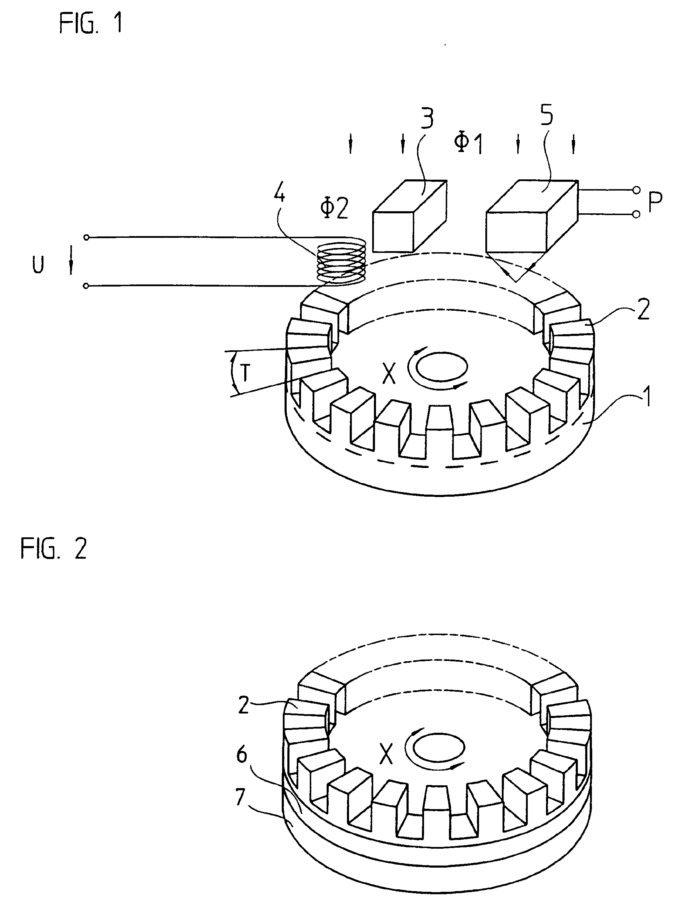

Das Gebersystem gemäß Figur 1 besteht aus einer Scheibe 1 aus elektrisch leitendem Material, auf deren Oberfläche eine Maßverkörperung in Form einer lichtelektrisch abtastbaren inkrementalen Teilung 2 ausgebildet ist. Hierzu kann die Scheibe 1 auf ihrer Oberfläche selbst strukturiert sein, indem beispielsweise partiell in Umfangsrichtung (Bewegungsrichtung X) Vertiefungen eingebracht werden, wobei die abwechselnd angeordneten Vertiefungen und Erhebungen ein an sich bekanntes reflektierendes Phasengitter bilden.

Die Teilung 2 kann aber auch als separate Schicht bzw. als Schichtenpaket auf der Scheibe 1 ausgebildet sein, diese Ausführung ist in Figur 1 gestrichelt eingezeichnet.

Zur Messung der Beschleunigung der Scheibe 1 in Bewegungsrichtung X (Drehung) ist ein Magnet 3 oder eine Spule zur Erzeugung eines Magnetfeldes Φ1 vorgesehen, das auf die Scheibe 1 senkrecht zur Bewegungsrichtung X einwirkt. Das Magnetfeld Φ1 erzeugt in der Scheibe 1 Wirbelströme, welche proportional zur Bewegungsgeschwindigkeit der Scheibe 1 sind. Diese Wirbelströme erzeugen ein weiteres Magnetfeld Φ2, das durch eine Spule 4 detektiert wird. Die in der Spule 4 induzierte Spannung U ist proportional der Beschleunigung der Scheibe 1. Dieses Prinzip der Beschleunigungsmessung ist auch als Ferraris-Prinzip bekannt.

Erfindungsgemäß wird das Positionssignal P für die Positionsmessung aus dem gleichen Bereich der Scheibe 1 gewonnen, aus dem auch die Beschleunigung U abgeleitet wird. Hierzu ist der Teilung 2 ein Abtastkopf 5 zugeordnet, der in bekannter Weise eine Lichtquelle und einen Photoempfänger beinhaltet. Das Licht der Lichtquelle ist auf die Teilung 2 gerichtet, wird dort positionsabhängig moduliert und wird zum Photoempfänger reflektiert.

Wenn die Teilung 2 integraler Bestandteil der Scheibe 1 ist, oder wenn die Teilung 2 eine Schicht aus elektrisch leitendem Material aufweist, bilden sich in der Regel auch in der Teilung 2 Wirbelströme aus. Dies kann die Beschleunigungsmessung unerwünscht beeinflussen. Um Wirbelströme in der Teilung 2 zu verhindern, wird für die Teilungsperiode T ein Wert gewählt, dass diese nicht fließen können. Dabei wird ausgenutzt, dass Wirbelströme eine gewisse räumliche Erstreckung aufweisen, die in einer Teilung 2 mit entsprechend feiner Teilungsperiode T von insbesondere kleiner 0,3 mm nicht gegeben ist. Dadurch kann wirkungsvoll verhindert werden, dass im Bereich der Teilung 2, obwohl diese aus leitendem Material besteht, Wirbelströme induziert werden und das Messergebnis der Beschleunigungsmessung verfälschen können.

Besteht die Teilung 2 ausschließlich aus elektrisch nichtleitendem Material, beeinflusst die Teilung 2 die Beschleunigungsmessung nicht. Die Teilung 2 kann dabei ein an sich bekanntes Phasengitter aus in Messrichtung X abwechselnd angeordneten Bereichen mit unterschiedlichen Brechungsindizes und / oder Stufenhöhe sein.

Enthält die Teilung 2 elektrisch leitendes Material und wir die Teilungsperiode T nicht so fein gewählt, dass Wirbelströme gar nicht entstehen können, besteht die Möglichkeit, die aktive Detektionsfläche der Spule 4 so groß zu wählen, dass das durch die Wirbelströme verursachte und von der Spule 4 erfasste magnetische Feld Φ2 über viele Teilungsperioden P gemittelt wird. Dadurch werden durch die Teilung 2 nur noch geringe Schwankungen im detektierten Beschleunigungssignal U verursacht. Um über möglichst viele Teilungsperioden P zu integrieren, kann die Spule 4 derart ausgestaltet sein, dass die aktive Fläche durch die der durch den Wirbelstrom verursachte Fluss Φ2 hindurchtritt zumindest annähernd einen Vollkreis von 360° beschreibt. Alternativ ist auch eine Parallel- oder Reihenschaltung mehrerer kleinerer Spulen denkbar. Dabei ist es vorteilhaft, die Spule bzw. die Spulen in Dünnschichttechnik zu fertigen. Dabei kann der Träger für die Spulen gleichzeitig der Träger für die Elemente des Abtastkopfes zur Positionsmessung sein.

Alternativ dazu besteht auch die Möglichkeit, dass im detektierten Beschleunigungssignal U die Positionsinformation P enthalten ist und diese hochfrequenten Signalanteile mittels eines Hochpasses vom niederfrequenten Signalanteil des Beschleunigungssignals U getrennt wird. Durch das Ausgangssignal des Hochpassfilters wird dann ein Zähler angesteuert, der Positionsänderungen in Vielfachen der Teilungsperiode T zählt. Durch Auswertung des Ausgangssignals U der Spule 4 wird dann sowohl die Position als auch die Beschleunigung ermittelt.

Ist die Teilung 2 als separate Schicht oder als Schichtenpaket auf der Scheibe 1 ausgebildet, ist es vorteilhaft, wenn die Verbindung der Teilung 2 an der Scheibe 1 eine temperaturbedingte Ausdehnung der Scheibe 1 relativ zur Teilungsschicht 2 erlaubt, ohne dass eine unzulässige Kraft auf die Teilungsschicht 2 ausgeübt wird, so dass keine Deformation oder gar Zerstörung der Teilungsschicht 2 aufgrund einer Ausdehnung der Scheibe 1 resultiert.

Die Teilung 2 kann auch kapazitiv, induktiv oder magnetisch abtastbar ausgebildet sein.

Die Messstruktur zur Beschleunigungsmessung muss nicht als Scheibe 1 ausgeführt sein, sie kann auch als eine Schicht 6 aus elektrisch leitendem Material auf einem isolierenden Träger 7, beispielsweise aus Glas, Kunststoff oder Leiterplattenmaterial aufgebracht sein. Die Teilung 2 kann auf diesem Träger 7 auf der Schicht 6 in Form eines gestuften reflektierenden Phasengitters oder in Form eines nach bekannten lithographischen Verfahren hergestellten Amplitudengitters ausgebildet sein. Diese Ausführungsform ist in Figur 2 schematisch dargestellt.

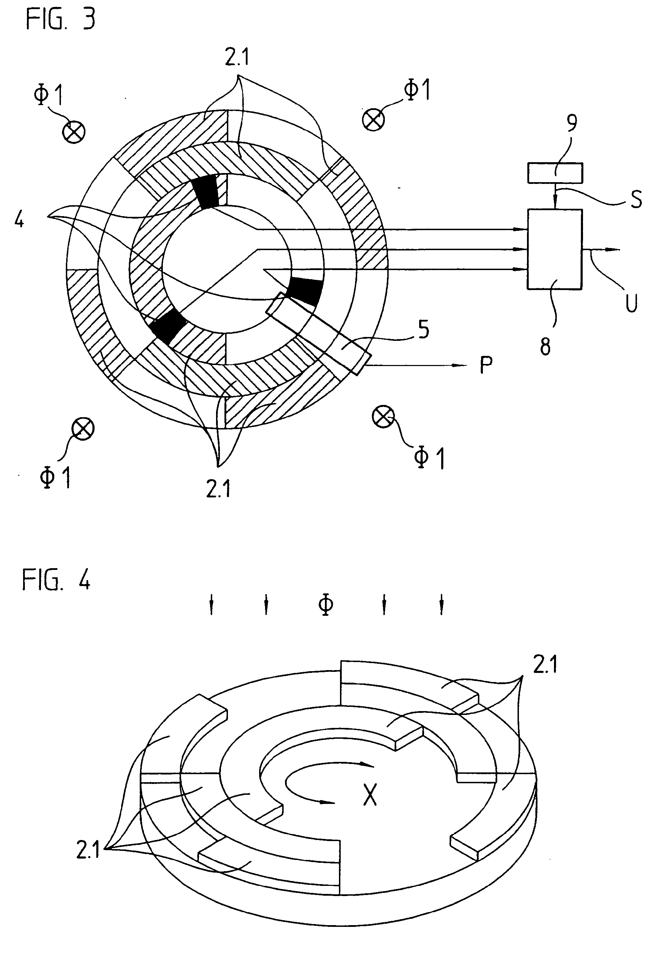

In einem weiteren Ausführungsbeispiel gemäß Figur 3 und 4 wird beschrieben, wie leitende Bereiche 2.1 einer absoluten Teilung 2 gleichzeitig als Messstruktur zur Beschleunigungsmessung benutzt werden können. Figur 3 zeigt die Draufsicht einer bekannten absoluten Teilung 2, die sowohl zur Positionsermittlung als auch erfindungsgemäß durch Beschleunigungssensoren 4 abgetastet wird. Figur 4 zeigt eine perspektivische Ansicht der Teilung 2 wie in Figur 3. Elektrisch leitende Bereiche 2.1 sind auf einem rotierenden, nicht leitenden Träger 7 verteilt angeordnet, so dass die leitenden Bereiche 2.1 eine absolut codierte Teilung 2 bilden. Die Beschleunigungssensoren 2.1 sind gemäß Figur 3 derart angeordnet, dass immer zumindest ein Beschleunigungssensor 4 sich über einem leitenden Bereich 2.1 befindet. Aufgrund eines konstanten magnetischen Flusses Φ1 senkrecht zur Oberfläche der Teilung 2, der durch eine hier nicht dargestellte Vorrichtung erzeugt wird, werden bei einer beschleunigten Bewegung der Teilung 2 sich ändernde Wirbelströme in den leitenden Bereichen 2.1 verursacht. Die Vorrichtung zur Erzeugung eines konstanten magnetischen Flusses Φ1 ist im einfachsten Fall ein Permanentmagnet. Die sich bei einer beschleunigten Bewegung ändernden Wirbelströme verursachen ihrerseits einen magnetischen Fluss Φ2, der durch die Beschleunigungssensoren in Form von mehreren Spulen 4 detektiert wird.

Dabei sind die Beschleunigungssensoren 4 derart anzuordnen bzw. es sind so viele Beschleunigungssensoren 4 vorzusehen, dass sich während der Drehung immer mindestens ein Beschleunigungssensor 4 über einem leitenden Bereich 2.1 befindet. Weiterhin sollen Wirbelströme nicht am Rand der leitenden Bereiche 2.1 ermittelt werden, da dort Beeinflussungen der Wirbelströme aufgrund der Grenze des leitenden Bereichs 2.1 auftreten, so dass es vorteilhaft ist mindestens drei Beschleunigungssensoren 4 anzuordnen. Dadurch kann sichergestellt werden, dass immer durch mindestens einen Beschleunigungssensor 4 eine Änderung des Wirbelstromfeldes aufgrund einer Beschleunigung detektiert werden kann.

Entsprechend der Form der leitenden Bereiche 2.1, über denen die Beschleunigungssensoren 4 angeordnet sind, der Anordnung der Beschleunigungssensoren 4, der ermittelten Position und der Drehrichtung wird durch eine Umschalteinrichtung 8 jeweils das Ausgangssignal desjenigen Beschleunigungssensors 4 zur Auswertung weitergeleitet, der sich gerade über einem leitenden Bereich 2.1 befindet. Die Umschalteinrichtung 8 kann dabei durch einen aus dem Stand der Technik bekannten Multiplexer realisiert werden, für den in einer Steuereinheit 9 aus der Form der leitenden Bereiche 2.1, über denen die Beschleunigungssensoren 4 angeordnet sind, der Anordnung der Beschleunigungssensoren 4, der ermittelten Position und der Drehrichtung die Steuersignale S zur Umschaltung ermittelt werden. Für die in Fig. 3 dargestellte Konfiguration aus Beschleunigungssensoren 4 und leitenden Bereichen 2.1 einer absoluten Teilung 2 erfolgt die Umschaltung von einem Beschleunigungssensor 4 zum nächsten in der Reihenfolge ihrer Anordnung im oder gegen den Uhrzeigersinn nach einer 120° Drehung der Teilung 2.

In einer weiteren Ausgestaltung können die leitenden Bereiche 2.1 der absoluten Teilung 2 auf beiden Seiten des Teilungsträgers 7 vorgesehen sein. Dann werden auch Ober- und Unterseite durch Beschleunigungssensoren 4 abgetastet. Dies weist den Vorteil auf, dass durch eine entsprechende Verschaltung der Ausgangssignale der Beschleunigungssensoren 4 ein schwankender Abstand zwischen Beschleunigungssensoren 4 und leitenden Bereichen 2.1 kompensiert werden kann. Wenn sich der Abstand zwischen Beschleunigungssensoren 4 und leitenden Bereichen 2.1 auf der Oberseite vergrößert, verkleinert sich dieser Abstand auf der Unterseite und umgekehrt. Dies wird zur Kompensation der dadurch verursachten Amplitudenschwankungen in den Ausgangssignalen der Beschleunigungssensoren 4 genutzt.

Die bisherigen Ausführungsbeispiele beziehen sich alle auf rotatorische Gebersysteme. Die in diesen Ausführungsbeispielen angegebene Lehre zum technischen Handeln kann jedoch identisch auch bei linearen Messsystemen angewandt werden, ebenso wie die Lehre zum technischen Handeln bei dem nun folgenden Ausführungsbeispiel für ein lineares Gebersystem identisch bei einem rotatorischen Gebersystemen angewandt werden kann.

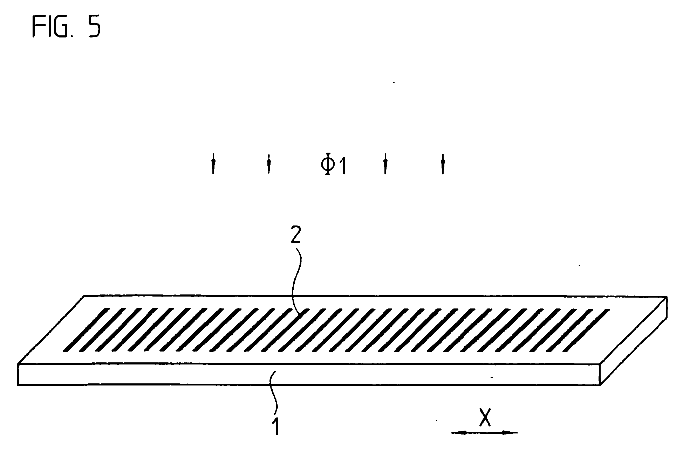

In dem Ausführungsbeispiel gemäss Figur 5 wird eine Teilungsstruktur 2 eines linearen Gebersystems in eine Messstruktur 1 für den Beschleunigungsgeber unmittelbar integriert. Dies erfolgt dadurch, dass die Messstruktur 1 elektrisch homogen und optisch inhomogen ausgestaltet wird.

Hierfür ist als Messstruktur 1 für den Beschleunigungsgeber ein bandförmiger elektrischer Leiter 1 vorgesehen, dessen Abtastkopf 5 zugewandte Oberfläche Licht nur geringfügig reflektiert. Es wird anschließend die Oberfläche des bandförmigen Leiters 1 derart bearbeitet, dass entsprechend der gewünschten Teilungsperiode des Positionsgebers Licht in bearbeiteten Bereichen gut reflektiert wird. Selbstverständlich ist auch der umgekehrte Fall möglich, dass Licht vom bandförmigen elektrischen Leiter 1 gut reflektiert wird und nach einer Bearbeitung in den bearbeiteten Bereichen nur noch schlecht reflektiert wird.

Dadurch, dass sich bearbeitete und nicht bearbeitete Bereiche mit der Teilungsperiode T abwechseln, kann eine inkrementale oder absolute Teilung 2 realisiert werden, die für eine auf einem optischen Abtastprinzip beruhende Positionsmessung benutzt werden kann. Da nur die optischen Eigenschaften der Oberfläche des bandförmigen Leiters 1 verändert wurden, wird dessen elektrische Leitfähigkeit durch die Teilung 2 nicht verändert und dadurch werden auch die Wirbelströme zur Beschleunigungsmessung durch die Teilung 2 zur Positionsmessung nicht beeinflusst.

Die Bearbeitung von Bereichen, um diese mehr oder weniger reflektierend auszugestalten, kann auf mehrere unterschiedliche Arten erfolgen. Beispielsweise kann eine dünne, nicht leitende Markierung aufgebracht werden oder eine bereits vorhandene dünne, nicht leitende Markierung entfernt werden. Dabei sollen die dünne, nicht leitende Markierung und der elektrische Leiter 1 andere optische Eigenschaften aufweisen, wodurch eine Teilung 2 für eine optische Abtastung realisiert wird.

Weitere Möglichkeiten den elektrischen Leiter 1 mit einer optischen, induktiven, magnetischen oder kapazitiven Teilung 2 zu versehen ohne den elektrischen Widerstand zu ändern bestehen darin, dass das Gefüge des Materials entsprechend der Teilungsperiode T verändert wird. Weiterhin kann das Gefüge des elektrischen Leiters 1 beispielsweise durch Umwandlung oder Dotierung partiell verändert werden, um eine Teilung 2 ohne Änderung der elektrischen Eigenschaften zu realisieren.

Alternativ dazu besteht auch die Möglichkeit an den Stellen, an denen Markierungen für die Positionsmessung vorgesehen sind, Material aus der Messstruktur 1 zu entfernen. Die kann beispielsweise in einem Ätzprozess erfolgen. Dadurch wird die Leitfähigkeit an diesen Stellen verringert, was unerwünscht sein kann. Um dies wieder auszugleichen, wird an diesen Stellen leitendes Material mit im Vergleich zum Material der Messstruktur 1 unterschiedlichen optischen Eigenschaften abgeschieden. Dabei wird die Menge abgeschiedenen Materials abhängig von der Leitfähigkeit dieses Materials gewählt, so dass die Messstruktur 1 für die Beschleunigungsmessung wieder an jeder Stelle die gleiche elektrische Leitfähigkeit aufweist.

## Patentansprüche

1. Gebersystem mit einem Geber zur Ermittlung der Beschleunigung und einem Geber zur Ermittlung der Position, wobei
- der Geber zur Ermittlung der Beschleunigung aus einem Körper mit einer elektrisch leitenden, nicht ferromagnetischen Messstruktur (1) sowie aus einer Vorrichtung (3) zur Erzeugung eines magnetischen Feldes (Φ1), welches auf die Messstruktur (1) einwirkt und aus einem Detektor (4) zur Erfassung eines magnetischen Messfeldes (Φ2) oder von Feldänderungen, welches aufgrund von in der Messstruktur (1) erzeugten Wirbelströme entsteht, besteht;
- der Geber zur Ermittlung der Position eine Maßverkörperung (2) aufweist;
- die ferromagnetische Messstruktur (1) und die Maßverkörperung (2) an einem gemeinsamen Körper ausgebildet sind, **dadurch gekennzeichnet, dass**
- der Detektor (4) der Maßverkörperung (2) gegenüberliegend angeordnet ist und diese an einem Abtastbereich abtastet, an dem die Messstruktur (1) und die Maßverkörperung (2) einander überlagernd bzw. ineinander integriert angeordnet sind und ein Beschleunigungssignal (U) und ein Positionssignal (P) aus diesem gemeinsamen Abtastbereich abgeleitet werden.

2. Gebersystem nach Anspruch 1, **dadurch gekennzeichnet, dass** die Maßverkörperung aus elektrisch leitenden Bereichen (2) besteht.

3. Gebersystem nach Anspruch 1 oder 2, **dadurch gekennzeichnet, dass** die Messstruktur (1) derart ausgebildet ist, dass das magnetische Messfeld (Φ2) positionsabhängig in Bewegungsrichtung (X) des Körpers (1) variiert, und dass der Detektor (4) das Beschleunigungssignal (U) und diesem überlagert das Positionssignal (P) liefert.

4. Gebersystem nach Anspruch 3, **dadurch gekennzeichnet, dass** das Beschleunigungssignal (U) einem Filter zur Auswahl hochfrequenter Signalkomponenten zugeführt ist, und dass aus den hochfrequenten Signalkomponenten ein inkrementales Positionssignal (P) abgeleitet wird.

5. Gebersystem nach Anspruch 1, **dadurch gekennzeichnet, dass**
- die Maßverkörperung partiell elektrisch leitende Bereiche (2) aufweist,
- mehrere Detektoren (4) vorgesehen sind, und
- eine Umschalteinrichtung (8) vorgesehen ist, um ein Ausgangssignal der Detektoren (4) als Beschleunigungssignal (U) auszuwählen.

6. Gebersystem nach Anspruch 1 oder 2, **dadurch gekennzeichnet, dass** die Messstruktur (1) derart ausgebildet ist, dass das magnetische Messfeld (Φ2) positionsabhängig in Bewegungsrichtung (X) des Körpers (1) variiert, und dass der Detektor (4) derart angeordnet ist, dass das Ausgangssignal (U) des Detektors (4) von der Maßverkörperung (2) zumindest weitgehend unmoduliert ist.

7. Gebersystem nach Anspruch 1, **dadurch gekennzeichnet, dass** die Maßverkörperung (2) lichtreflektierend ausgebildet ist und aus in Bewegungsrichtung (X) des Körpers (1) abwechselnd angeordneten Erhebungen und Vertiefungen besteht.

8. Gebersystem nach Anspruch 7, **dadurch gekennzeichnet, dass** die Erhebungen aus elektrisch leitenden Bereichen bestehen, deren Abmessungen so klein gewählt sind, dass keine Wirbelströme entstehen.

9. Gebersystem nach Anspruch 1, **dadurch gekennzeichnet, dass** die Maßverkörperung (2) lichtelektrisch abtastbar ausgebildet ist und zur Abtastung ein optischer Abtastkopf (5) vorgesehen ist.

10. Gebersystem nach einem der vorhergehenden Ansprüche, **dadurch gekennzeichnet, dass** die Maßverkörperung (2) aus einer Schicht oder einem Schichtenpaket besteht, das auf der elektrisch leitenden Messstruktur (1) aufgebracht ist.

11. Gebersystem nach Anspruch 10, **dadurch gekennzeichnet, dass** die Messstruktur eine Schicht (6) oder ein Schichtenpaket aus elektrisch leitendem Material auf einem elektrisch nichtleitenden Träger (7) ist.

## Claims

1. Transmitter system having a transmitter for detecting acceleration and a transmitter for detecting position,
- the transmitter for detecting acceleration comprising a body with an electrically conductive, non-ferromagnetic measuring structure (1) and also a device (3) for producing a magnetic field (Φ1) which acts upon the measuring structure (1) and a detector (4) for detecting a magnetic measuring field (Φ2) or field changes which arise because of eddy currents produced in the measuring structure (1);
- the transmitter for detecting the position having a material measure (2),
- the ferromagnetic measuring structure (1) and the material measure (2) being configured on a common body, **characterised in that**
- the detector (4) is disposed opposite the material measure (2) and scans the latter at a scanning region at which the measuring structure (1) and the material measure (2) are disposed one superimposed on the other or integrated one in the other and an acceleration signal (U) and a position signal (P) are derived from this common scanning region.

2. Transmitter system according to claim 1, **characterised in that** the material measure comprises electrically conductive regions (2).

3. Transmitter system according to claim 1 or 2, **characterised in that** the measuring structure (1) is configured such that the magnetic measuring field (Φ2) varies as a function of position in the direction of movement (X) of the body (1), and **in that** the detector (4) delivers the acceleration signal (U) and the position signal (P) superimposed on the latter.

4. Transmitter system according to claim 3, **characterised in that** the acceleration signal (U) is supplied to a filter for selection of high-frequency signal components, and **in that** an incremental position signal (P) is derived from the high-frequency signal components.

5. Transmitter system according to claim 1, **characterised in that**
- the material measure has partially electrically conductive regions (2),
- a plurality of detectors (4) is provided, and
- a switching device (8) is provided in order to select an output signal of the detectors (4) as acceleration signal (U).

6. Transmitter system according to claim 1 or 2, **characterised in that** the measuring structure (1) is configured such that the magnetic measuring field (Φ2) varies as a function of position in the direction of movement (X) of the body (1), and **in that** the detector (4) is disposed such that the output signal (U) of the detector (4) is at least extensively unmodulated by the material measure (2).

7. Transmitter system according to claim 1, **characterised in that** the material measure (2) is configured to be light-reflecting and comprises raised portions and depressions which are disposed alternately in the direction of movement (X) of the body (1).

8. Transmitter system according to claim 7, **characterised in that** the raised portions comprise electrically conductive regions, the dimensions of which are chosen to be so small that no eddy currents are produced.

9. Transmitter system according to claim 1, **characterised in that** the material measure (2) is configured to be photoelectrically scannable and an optical scanning head (5) is provided for scanning.

10. Transmitter system according to one of the preceding claims, **characterised in that** the material measure (2) comprises a layer or a layer packet which is applied on the electrically conductive measuring structure (1).

11. Transmitter system according to claim 10, **characterised in that** the measuring structure is a layer (6) or a layer packet made of electrically conductive material on an electrically non-conductive carrier (7).

## Revendications

1. Système de capteurs, comprenant un capteur pour déterminer l'accélération et un capteur pour déterminer la position, dans lequel
- le capteur destiné à déterminer l'accélération se compose d'un corps doté d'une structure de mesure (1) électroconductrice, non ferromagnétique, ainsi que d'un dispositif (3) de génération d'un champ magnétique (Φ1), qui agit sur la structure de mesure (1), et d'un détecteur (4) pour détecter un champ de mesure magnétique (Φ2) ou des variations de champ, engendré(es) par des courants de Foucault produits dans la structure de mesure (1);
- le capteur destiné à déterminer la position présente une mesure matérialisée (2);
- la structure de mesure (1) ferromagnétique et la mesure matérialisée (2) sont réalisées sur un corps commun, **caractérisé en ce que**
- le détecteur (4) est disposé en vis-à-vis de la mesure matérialisée (2) et explore celle-ci dans une zone de balayage dans laquelle la structure de mesure (1) et la mesure matérialisée (2) sont superposées ou intégrées l'une à l'autre, et un signal d'accélération (U) et un signal de position (P) sont dérivés de cette zone de balayage commune.

2. Système de capteurs selon la revendication 1, **caractérisé en ce que** la mesure matérialisée se compose de zones électroconductrices (2).

3. Système de capteurs selon la revendication 1 ou 2, **caractérisé en ce que** la structure de mesure (1) est conçue de manière à ce que le champ de mesure magnétique (Φ2) varie en fonction de la position, dans la direction de déplacement (X) du corps (1), et **en ce que** le détecteur (4) fournit le signal d'accélération (U) et, superposé à celui-ci, le signal de position (P).

4. Système de capteurs selon la revendication 3, **caractérisé en ce que** le signal d'accélération (U) est acheminé à un filtre de sélection de composantes de signal à haute fréquence et **en ce qu'**un signal de position (P) incrémental est dérivé desdites composantes de signal à haute fréquence.

5. Système de capteurs selon la revendication 1, **caractérisé en ce que**
- la mesure matérialisée présente des zones (2) partiellement électroconductrices;
- plusieurs détecteurs (4) sont prévus, et
- un dispositif de commutation (8) est prévu pour sélectionner un signal de sortie des détecteurs (4) en tant que signal d'accélération (U).

6. Système de capteurs selon la revendication 1 ou 2, **caractérisé en ce que** la structure de mesure (1) est conçue de manière à ce que le champ de mesure magnétique (Φ2) varie en fonction de la position, dans la direction de déplacement du corps (1), et **en ce que** le détecteur (4) est disposé de manière à ce que le signal de sortie (U) du détecteur (4) ne soit pas modulé, au moins dans une large mesure, par la mesure matérialisée (2).

7. Système de capteurs selon la revendication 1, **caractérisé en ce que** la mesure matérialisée (2) est réalisée de manière à réfléchir la lumière et se compose de reliefs et de creux disposés en alternance dans la direction de déplacement (X) du corps (1).

8. Système de capteurs selon la revendication 7, **caractérisé en ce que** les reliefs sont constitués de zones électroconductrices dont les dimensions sont choisies si petites qu'elles n'engendrent pas de courants de Foucault.

9. Système de capteurs selon la revendication 1, **caractérisé en ce que** la mesure matérialisée (2) est agencée de manière à pouvoir être explorée par voie photoélectrique et une tête de balayage (5) optique est prévue pour effectuer l'exploration.

10. Système de capteurs selon une des revendications précédentes, **caractérisé en ce que** la mesure matérialisée (2) se compose d'une couche ou d'un corps stratifié qui est appliqué(e) sur la structure de mesure (1) électroconductrice.

11. Système de capteurs selon la revendication 10, **caractérisé en ce que** la structure de mesure est une couche (6) ou un corps stratifié formé(e) d'un matériau électroconducteur sur un support (7) électriquement non conducteur.
